# EUROPEAN PATENT SPECIFICATION

(11) **EP 1 282 572 B1**
(45) Date of publication and mention of the grant of the patent: **01.12.2004**
(21) Application number: 01936781.2
(22) Date of filing: 08.05.2001
(51) Int. Cl.: B65G 37/00, B65G 19/02, B65G 47/26

(54) **APPARATUS AND METHOD FOR CONVEYING PLASTIC BOTTLES**
VORRICHTUNG UND VERFAHREN ZUM FÖRDERN VON FLASCHEN
APPAREIL ET PROCEDE PERMETTANT DE TRANSPORTER DES RECIPIENTS, NOTAMMENT DES RECIPIENTS EN MATIERE PLASTIQUE DOTES D'UNE COLLERETTE SAILLANTE

(30) Priority: 10.05.2000 IT PR000032
(43) Date of publication of application: 12.02.2003
(73) Proprietor: Priero, Marco, 43036 Fidenza Parma (IT)
(72) Inventor: Priero, Marco, 43036 Fidenza Parma (IT)
(74) Representative: Gotra, Stefano
(86) International application number: PCT/IT2001/000222
(87) International publication number: WO 2001/085580

(56) References cited:
- EP-A- 0 805 117
- EP-A- 0 875 470
- DE-A- 4 204 884
- US-A- 4 802 571
- US-A- 5 937 998

## Description

### TECHNICAL FIELD AND BACKGROUND ART.

The present invention relates to an apparatus and a method for conveying containers, in particular for containers made of plastic material provided with projecting collar.

So-called "positive" conveyers (i.e. not air-driven but exclusively mechanical), having the purpose of conveying plastic containers along a transport line without making use of fans, are known.

Some of these conveyers are described in IT 1190535, IT 1265521 and in patent applications 40029A90, PR93A000043 and PR95A000028, as well as in patent application PR94A000008.

However, the aforesaid conveyers generally have a fixed guide for supporting the projecting collar of the containers and thrusters that act above said collar, possibly inside a channel formed by the fixed guide.

The action above the collar is particularly critical both because it takes place in correspondence with the thread of the mouth of the container and hence it can compromise its precision, and because the transport channel comprises within it the thrusters and their mechanical actuation means with the possibility of contaminating the containers with dust, dirt and grease or lubricants leaked off the actuation means.

Moreover, if the flow of the containers is interrupted, known devices do not allow for the accumulation of the containers, or if they do allow for it they can damage the surface of the containers or they are particularly noisy.

### DISCLOSURE OF THE INVENTION.

EP-A-0805117 discloses an apparatus for conveying containers as in the preamble of claim 1. However as the means for thrusting the containers act on the shoulders or on the main body of the container and not in the neck area, they may cause damage on the container and they need to be adapted to different sized containers.

The aim of the present invention is to eliminate the aforesaid drawbacks and to make available a conveying apparatus that is highly hygienic and that can hence be used in aseptic conditions. A further aim is not to compromise the integrity of the thread of the containers and to make the conveyor simple and economical.

Another aim is to make available an innovative conveyance method that does not use air and allows for the accumulation of the containers without noise and damage to the containers.

Said aims are fully achieved by the apparatus and by the method for conveying that constitute the subject of the present invention and that are characterised by the contents of the claims set out below and in particular in that the thrusting means of the apparatus are so shaped as to operate below a stationary guide, which serves as a support for the containers or as a simple protection guide defining an isolated conveyance channel, and on the container's neck below the collar that bears on said stationary guide.

Said thruster means operate symmetrically from opposite sides of the container in a direction substantially perpendicular to the direction of conveyance and preferably have an upwardly directed thrust component to keep the containers raised relative to the stationary guide.

The thrusting means preferably comprise a pair of movable chains of the roller type, with rollers having preferably horizontal axis, positioned symmetrically at the sides of the conveyance path of the containers, to each of which are associated elastic flexible elements (or even non flexible elements) that interact with each container to cause its advance along the conveyance path.

The stationary guide preferably forms a substantially closed and empty conveyance channel that inferiorly defines a slit into which are inserted only the necks of the containers whose projecting collars can bear and slide onto the stationary guide at the sides of the slit, whilst all the actuation means and the other elements of the apparatus are external to the conveyance channel, which can be adjustable in width and comprise in its interior sanitisation means so shaped as to spray sanitising liquid into the channel.

The method is characterised in that the thrust of the containers takes place below the stationary guide and below the collar that bears onto said stationary guide, in an area lying between the collar and the shoulder of the container, according to a direction that is substantially perpendicular to the direction of conveyance of the containers.

### BRIEF DESCRIPTION OF THE DRAWINGS.

This and other features shall become more readily apparent from the following description of a preferred embodiment illustrated, purely by way of non limiting example, in the accompanying drawing tables, in which:

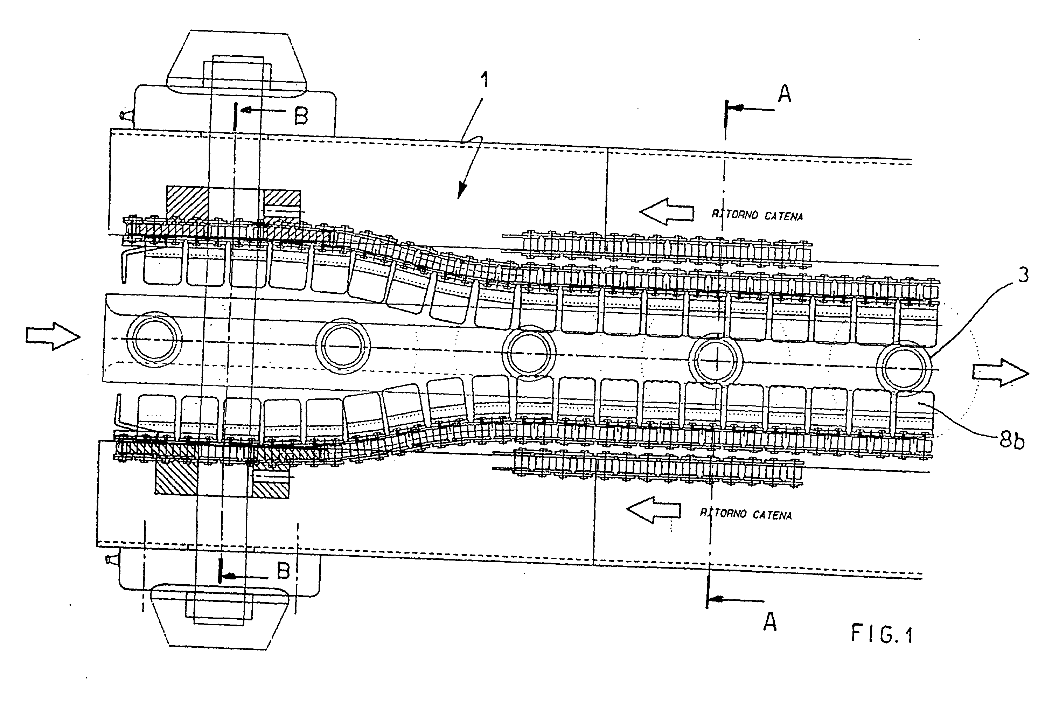

- Figure 1 shows a plan view of the apparatus;

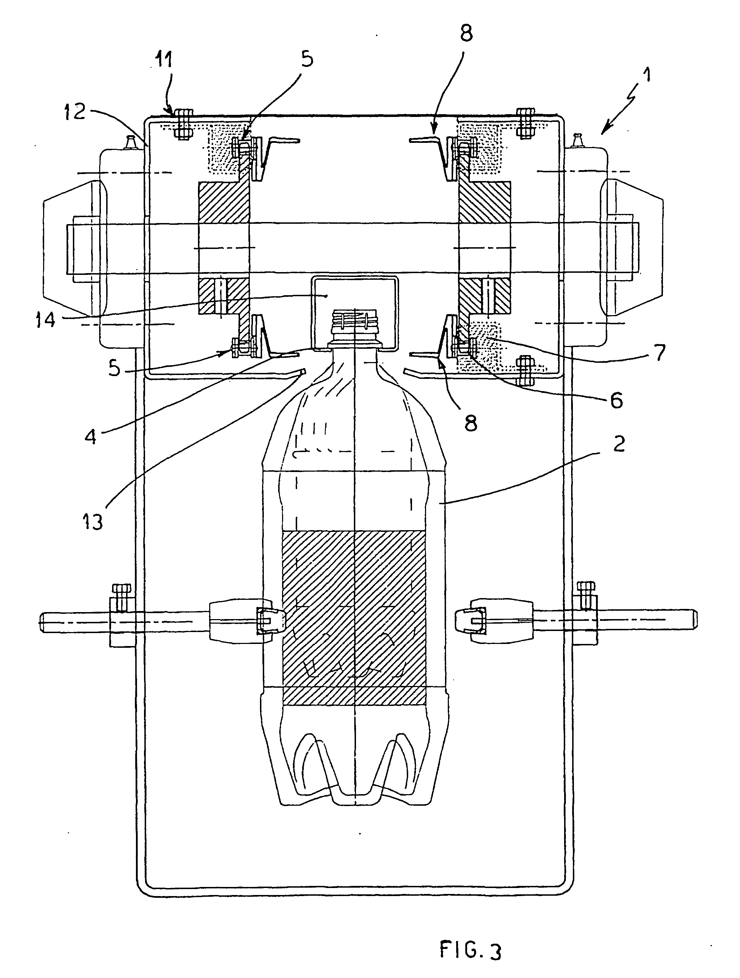

- Figures 2 and 3 show respectively a section view of the apparatus according the straight line A-A and according to the straight line B-B of Figure 1;
- Figure 2A shows an embodiment variation of the apparatus of Figure 2;
- Figures 4a, 4b and 4c respectively show a view according to the direction of conveyance, a lateral view and a plan view of a detail of the elastic flexible components of the apparatus;

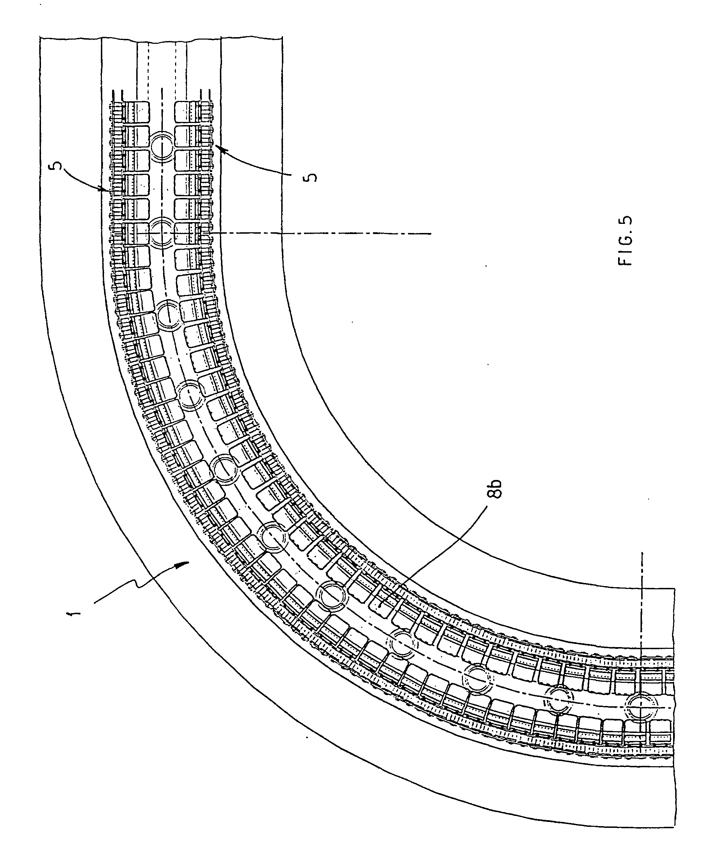

- Figure 5 schematically shows a plan view of the apparatus in a curvilinear path.

### BEST MODE FOR CARRYING OUT THE INVENTION.

With reference to the Figures, the reference number 1 globally indicates an apparatus for conveying containers 2 made of plastic material, such as PET, provided with projecting collar 3.

The apparatus comprises a stationary guide 4 for supporting the containers in correspondence with the collar 3, which guide is obtained from substantially "C" shaped section bars which partially overlap in the upper area leaving instead a lower opening or slit in such a way as to define a channel 14 for the conveyance of the containers which is substantially closed and empty in its interior, i.e. containing no element (except for the sanitisation means described below), open only inferiorly to allow the introduction of the mouths ofthe container so that the respective collars 3 bear down on the stationary guide 4 with the capability to slide thereon.

The stationary guide 4 can serve, in a preferred embodiment, only as a guide for protecting the conveyance channel, because the containers can travel with the mouths inside the guide without the collars bearing down thereon.

Thrusting or driving means are provided for actuating the containers along the stationary guide, comprising a pair of closed chains 5 of the roller 6 type which slide in appropriate supporting and guiding sections 7, are actuated on substantially vertical planes and are positioned symmetrically to the sides of the conveyance path of the containers.

The roller chains are of the type suitable also for curvilinear paths and can be constituted by equivalent mechanical actuation means, such as ropes or belts.

The rollers 6 have substantially horizontal axis, in order not to cause wear to the sections 7 in the upwardly inclined segments as can take place instead with the vertical axis rollers of the prior art.

This notwithstanding, for particular applications in which minimal radiuses of curvature are required, vertical axis rollers can be adopted.

To the rollers 6 are applied elastic flexible elements 8 which originally interact laterally and symmetrically with the containers in the neck area below the collar and below the stationary guide according to a direction that is substantially perpendicular to that of conveyance and exerting a thrust that preferably has an upwardly directed component in order to keep the containers raised relative to the stationary guide, or anyway at least to reduce their weight on the stationary guide, thereby favouring their sliding by reducing the sliding friction.

The elastic flexible elements 8 move the containers but slide thereon without noise and without causing any damage, in case of interruption of the flow of conveyance of the containers, allowing for an easy accumulation of the containers along the conveyance path.

The elastic flexible elements 8 form a substantially continuous surface for thrusting and actuating the containers.

The elastic flexible elements 8 can be replaced, in a variation not shown herein, by non flexible elements, or by simple horizontal platelets applied to the links of the chains.

The "C" shaped section bars of the stationary guide 4 partially overlap in the upper area from a position of minimum overlap corresponding to a conveyance channel of maximum width (for containers having a neck with larger diameter), to a position of maximum overlap corresponding to a conveyance channel of minimum width (for containers whose neck has smaller diameter). The "C" shaped section bars are supported by brackets 9 bolted on cross members 10.

The positioning of the sections 7 for supporting and guiding the chains can be adjusted by means of bolts 11 that operate in slots obtained in the support frame 12 of the apparatus, which inferiorly presents two lower profiles 13, upwardly contoured to contain any dirt, preventing it from falling on the containers.

The flexibility of the sections 7 together with their ability to be adjusted and to the adoption of the roller chains makes curvilinear paths for the containers possible, both on an upward and on a downward slope.

The conveyance channel 14 can comprise in its interior sanitisation means in the form of nozzles, schematically indicated as 17, able to spray sanitising liquid into the channel.

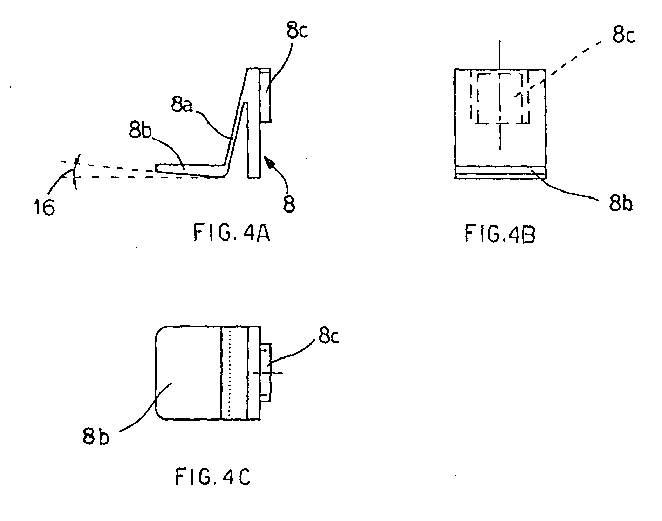

The elastic flexible elements 8, shown in greater detail in Figures 4a, 4b and 4c, substantially comprise a first portion 8a, shaped as an inverted "V" provided with a second portion 8b shaped as a horizontal tab (or a slightly upwardly inclined tab, with an angle 16 having an amplitude of about 4-15° and preferably about 5° to favour the upward thrust of the containers) at the opposite side from the one whereto the first portion 8a is fastened, in removable fashion, to the chain by means of a coupling 8c.

The elastic flexible elements are preferably made of plastic or synthetic material, but can also be metallic.

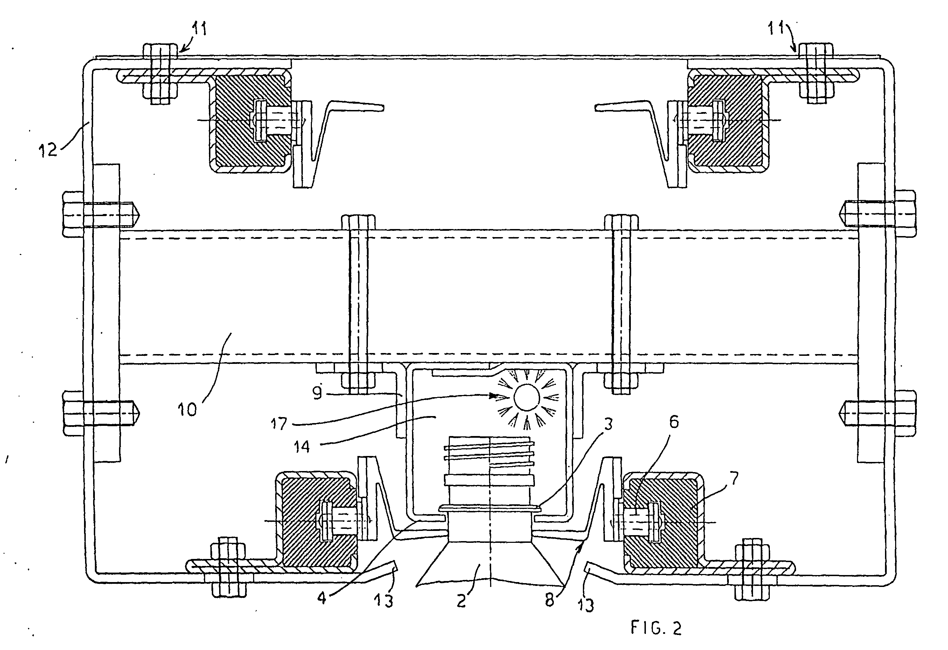

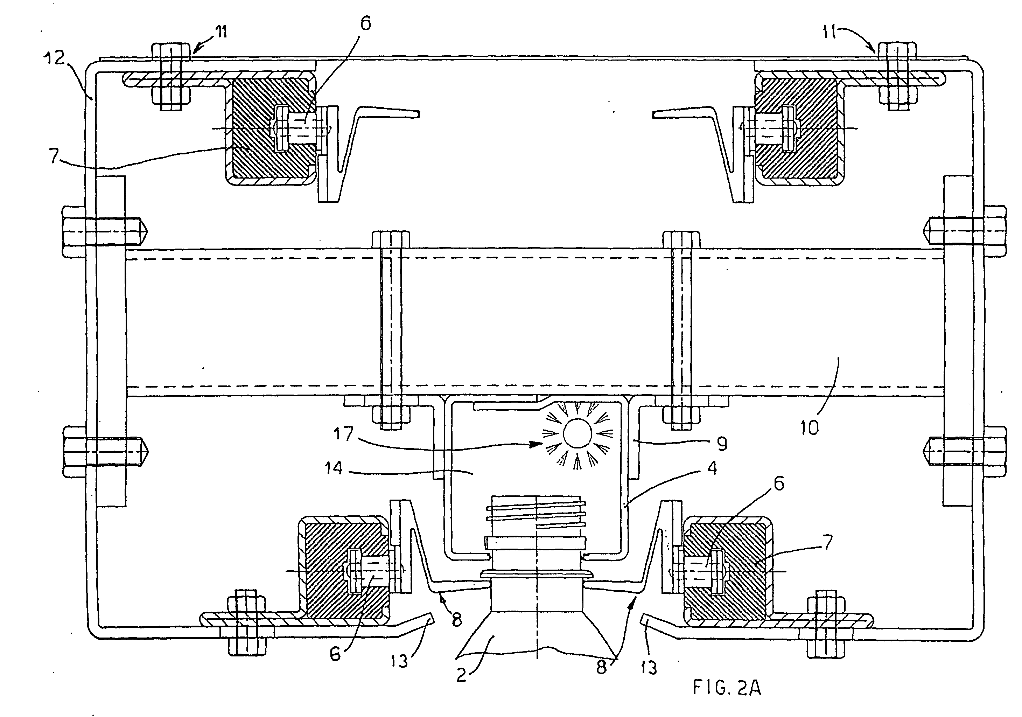

According to an embodiment variation shown in Figure 2A, the stationary guide 4 is not below the collar, but originally it is above the collar below an enlargement of the neck of the container that precedes the thread of the mouth.

This enlargement can bear down and slide on the stationary guide, but it can also not bear down on it and remain detached therefrom, as shown in the figure, since the container is sustained by the lateral elastic flexible elements.

## Claims

1. An apparatus (1) for conveying containers (2), in particular for containers made of plastic material provided with projecting collar (3) on a container's neck of the type comprising:
- a stationary guide (4);
- means (5, 8) for thrusting the containers which actuate the containers along the stationary guide that defines a direction of conveyance,
**characterised in that** the thrusting means (5, 8) are so shaped as to operate in the neck area below the stationary guide (4) and below the collar (3) acting symmetrically on opposite sides of the container in a direction substantially perpendicular to the direction of conveyance.

2. An apparatus as claimed in claim 1, wherein the thrusting means are so shaped as to be able to slide laterally on the containers, which remain stationary, when the flow of advance of the containers is interrupted and the containers accumulate along the conveyance path.

3. An apparatus as claimed in claim 1, wherein the thrusting means comprise a pair of movable chains (5) positioned symmetrically at the sides of the conveyance path of the containers, to each chain (5) being associated elastic flexible means (8) that interact with each container to cause its advance along the conveyance path.

4. An apparatus as claimed in claim 3, wherein the chains (5) are chains with rollers (6) that develop in a substantially vertical plane and have the rollers (6) with horizontal axis.

5. An apparatus as claimed in claim 1, wherein the stationary guide (4) is so shaped as to form a substantially closed and empty conveyance channel (14) that defines inferiorly a slit into which only the necks of the containers are inserted.

6. An apparatus as claimed in claim 5, wherein the conveyance channel (14) comprise sanitisation means (17) so shaped as to spray sanitising liquid into the channel.

7. An apparatus as claimed in claim 5, wherein the conveyance channel (14) comprises means that allow its width to be adjusted.

8. An apparatus as claimed in claim 7, wherein said means comprise two "C" shaped section bars, constituting the stationary guide (4), which partially overlap in the upper area from a position of minimum overlap corresponding to a conveyance channel of maximum width, to a position of maximum overlap corresponding to a conveyance channel of minimum width.

9. An apparatus as claimed in claim 1, 2 or 3, wherein the thrusting means (5, 8) are so shaped as to produce an upward thrust component that actuates the container maintaining them with the collar (3) raided relative to the stationary guide (4).

10. An apparatus as claimed in claim 3, wherein each elastic flexible element (8) comprises a first portion (8a) shaped as an inverted "V" and a second portion (8b) shaped as a horizontal tab at the side opposite the one in which the first portion (8a) is fastened, in removable fashion, to the chain (5).

11. An apparatus as claimed in claim 10, wherein the second portion (8b) is inclined upwards by about 4-10° relative to a horizontal plane.

12. An apparatus as claimed in claim 1, wherein the thrusting means comprise a pair of movable chains (5) positioned symmetrically at the sides of the conveyance path of the containers, to each chain (5) being associated plate-shaped elements which interact with each container to cause its advance along the conveyance path, forming a substantially continuous contact front.

13. An apparatus as claimed in claim 3, wherein each chain (5) slides within a contoured guiding section (7) whose position can be adjusted closer to or farther away from the conveyance path.

14. An apparatus as claimed in claim 1, wherein the stationary guide (4) operates above the projecting collar (3) and below the start of the thread of the mouth of the container.

15. An apparatus as claimed in claim 1, wherein a lower section bar (13) of the apparatus (1) is upwardly contoured.

16. A method for conveying containers, in particular for containers made of plastic material provided with projecting collar on a container's neck actuated along a direction of conveyance defined by a stationary protecting guide, by thrusting the containers,
**characterised in that** the thrust on the containers takes place in the neck area below the stationary guide and below the collar by symmetric action on opposite sides of the container, in a direction substantially perpendicular to that of conveyance.

17. A method as claimed in claim 16, wherein the thrust on the containers has an upward component that actuates the containers maintaining them with the collar raised relative to the stationary guide.

## Patentansprüche

1. Vorrichtung (1) zum Fördern von Behältern (2), insbesondere von Behältern aus Kunststoff, die oberhalb eines Schulterbereiches einen Halsbereich und oberhalb dieses Halsbereiches einen abstehenden Kragen (3) aufweisen, der Art umfassend:
- eine ortsfeste Führung (4) zum Haltern der Behälter an deren abstehenden Kragen (3)
- Mittel (5, 8) zum Schieben der Behälter entlang der die Transportrichtung bestimmende ortsfeste Führung,
**dadurch gekennzeichnet, dass** die Schiebemittel (5, 8) in dem Halsbereich unterhalb der ortsfesten Führung (4) und unterhalb des Kragens (3) an den Behältern angreifen, wobei sie symmetrisch auf gegenüberliegenden Seiten der Behälter im wesentlichen senkrecht zu der Förderrichtung wirken.

2. Vorrichtung nach Anspruch 1, bei der die Schiebemittel so ausgebildet sind, dass sie seitlich an den feststehenden Behältern vorbeigleiten können, wenn der Vorwärtsfluss der Behälter unterbrochen wird und sich die Behälter entlang dem Förderweg stauen.

3. Vorrichtung nach Anspruch 1, bei der die Schiebemittel ein Paar bewegliche Ketten (5) umfassen, die symmetrisch auf den Seiten des Förderwegs der Behälter angeordnet sind, wobei jeder Kette (5) elastische biegsame Mittel (8) zugeordnet sind, die mit den einzelnen Behältern zusammenwirken, um diese entlang des Förderwegs zu verfahren.

4. Vorrichtung nach Anspruch 3, bei der es sich bei den Ketten (5) um Ketten mit Rollen (6) handelt, welche sich in einer im wesentlichen senkrechten Ebene erstrecken und deren Rollen (6) eine horizontale Achse aufweisen.

5. Vorrichtung nach Anspruch 1, bei der die ortsfeste Führung (4) so ausgebildet ist, dass sie eine im wesentlichen geschlossenen und leeren Förderkanal (14) ausbildet, der auf der Unterseite einen Schlitz bildet, in welchen nur die Hälse der Behälter eintreten.

6. Vorrichtung nach Anspruch 5, bei der der Förderkanal (14) Reinigungsmittel (17) umfasst, die zum Versprühen von Reinigungsflüssigkeit in den Kanal ausgebildet sind.

7. Vorrichtung nach Anspruch 5, bei der der Förderkanal (14) Mittel umfassst, mithilfe derer seine Breite verstellbar ist.

8. Vorrichtung nach Anspruch 7, bei der die genannten Mittel zwei C-förmige, die ortsfeste Führung (4) bildende Profile umfasst, die sich im oberen Bereich teilweise überlappen, und zwar zwischen einer minimalen, einem Förderkanal maximaler Breite entsprechenden Überlappungsstellung, und einer maximalen, einem Förderkanal minimaler Breite entsprechenden Überlappungsstellung.

9. Vorrichtung nach Anspruch 1, 2 oder 3, bei der die Schiebemittel (5, 8) so ausgebildet sind, dass sie eine nach oben gerichtete Schiebekomponente ausüben, durch welche die Behälter so bewegt werden, dass ihr Kragen (3) gegenüber der ortsfesten Führung (4) angehoben bleibt.

10. Vorrichtung nach Anspruch 3, bei der die elastischen biegsamen Elemente (8) einen ersten als umgekehrtes "V" ausgebildeten Bereich (8a) und einen zweiten als waagerechten Steg ausgebildeten Bereich (8b) umfassen, der gegenüber der Seite liegt, auf der der erste Bereich (8a) lösbar an der Kette (5) befestigt ist.

11. Vorrichtung nach Anspruch 10, bei der der zweite Bereich (8b) gegenüber einer horizontalen Ebene um etwa 4-10° nach oben geneigt ist.

12. Vorrichtung nach Anspruch 1, bei der die Schiebemittel ein Paar bewegliche Ketten (5) umfassen, die symmetrisch auf den Seiten des Förderweges der Behälter angeordnet sind, wobei jeder Kette (5) plattenförmige Elemente zugeordnet sind, die mit den einzelnen Behältern zusammenwirken, um deren Verfahren entlang des Förderwegs zu bewirken, wobei eine im wesentlichen durchgehende Kontaktfläche gebildet wird.

13. Vorrichtung nach Anspruch 3, bei der jede Kette (5) in einem geformten Führungsprofil (7) gleitet, dessen Stellung verstellbar, d.h. an den Förderweg näherbar oder von diesem entfernbar ist.

14. Vorrichtung nach Anspruch 1, bei der die ortsfeste Führung (4) oberhalb des abstehenden Kragens (3) und unterhalb des Gewindebeginns der Behälteröffnung ansetzt.

15. Vorrichtung nach Anspruch 1, bei der ein unteres Profil (13) der Vorrichtung (1) nach oben gerichtet ausgebildet ist.

16. Verfahren zum Fördern von Behältern, inbesondere von Behältern aus Kunststoff, die oberhalb eines Schulterbereiches einen Halsbereich und oberhalb dieses Halsbereiches einen abstehenden Kragen aufweisen, wobei die Behälter durch Schieben derselben entlang einer durch eine ortsfeste abstehende Führung (4) bestimmten Förderrichtung bewegt werden, welche Führung die Behälter an deren abstehenden Kragen (3) haltert,
**dadurch gekennzeichnet, dass** das Schieben der Behälter in dem Halsbereich unterhalb der ortsfesten Führung und unterhalb des Kragens durch symmetrisches Einwirken auf gegenüberliegende Seiten des Behälters im wesentlichen senkrecht zu der Förderrichtung erfolgt.

17. Verfahren nach Anspruch 16, bei dem. das Schieben der Behälter eine nach oben gerichtete Komponente aufweist, welche die Behälter so bewegt, dass deren Kragen gegenüber der ortsfesten Führung angehoben bleibt.

## Revendications

1. Appareil (1) servant à transporter des récipients (2) notamment des récipients en matière plastique avec une portion en col au-dessus d'une portion en épaule et munis d'un collier saillant (3) au-dessus de ladite portion en col, ledit appareil étant du type qui comporte :
- une glissière fixe (4) pour supporter le récipient par son collier saillant (3)
- des dispositifs (5, 8) pour pousser les récipients le long de la glissière fixe qui définit une direction de convoyage,
**caractérisé par le fait que** les dispositifs de poussée (5, 8) poussent les récipients dans leur zone de col sous la glissière fixe (4) et sous le collier (3), en agissant de manière symétrique sur les côtés opposés du récipient dans une direction substantiellement perpendiculaire à la direction de convoyage.

2. Appareil selon la revendication 1, où les dispositifs de poussée ont une forme qui leur permet de glisser latéralement sur les récipients, qui restent immobiles, lorsque le flux d'avance des récipients est interrompu et que les récipients s'accumulent le long du parcours de convoyage.

3. Appareil selon la revendication 1, où les dispositifs de poussée comprennent une paire de chaînes mobiles (5) positionnées symétriquement sur les côtés du parcours de convoyage des récipients, chaque chaîne (5) étant associée à des dispositifs élastiques souples (8) qui interagissent avec chaque récipient pour entraîner son avancement le long du parcours.

4. Appareil selon la revendication 3 où les chaînes (5) sont des chaînes munies de galets (6) qui se développent sur un plan substantiellement vertical et où les galets (6) sont placés sur un axe horizontal.

5. Appareil selon la revendication 1 où la glissière fixe (4) possède une forme lui permettant de former un canal de convoyage (14) substantiellement fermé et vide qui détermine une fente vers le bas où seuls les cols des récipients sont introduits.

6. Appareil selon la revendication 5 où le canal de convoyage (14) comprend des dispositifs de désinfection (17) possédant la forme appropriée pour introduire un liquide de désinfection dans le canal.

7. Appareil selon la revendication 5, où le canal de convoyage (14) comprend des dispositifs qui permettent de régler sa largeur.

8. Appareil selon la revendication 7, où lesdits dispositifs comprennent deux barres en «C» qui constituent la glissière fixe (4) qui se superposent en partie dans la zone supérieure depuis une position de superposition minimum correspondant à un canal de convoyage de largeur maximum, à une position de superposition maximum correspondant à un canal de convoyage de largeur minimum.

9. Appareil tel que décrit aux revendications 1, 2 ou 3 où les dispositifs de poussée (5, 8) ont une forme qui leur permet de présenter un composant de poussée vers le haut qui meut les récipients en les maintenant par le collier (3) soulevé par rapport à la glissière fixe (4).

10. Appareil selon la revendication 3, où chaque élément élastique souple (8) comprend une première portion (8a) en forme de V inversé et une deuxième portion (8b) en forme d'ailette horizontale du côté opposé à celui où la première portion (8a) est fixée, de manière amovible, à la chaîne (5).

11. Appareil selon la revendication 10, où la deuxième portion (8b) est inclinée vers le haut de 4-10° environ par rapport à un plan horizontal.

12. Appareil selon la revendication 1, où le moyen de poussée comporte une paire de chaînes mobiles (5) positionnées de manière symétrique sur les côtés du parcours de convoyage des récipients, chaque chaîne (5) étant associée à des éléments plats qui interagissent avec chaque récipient pour le faire avancer le long du parcours de convoyage, en formant un front de contact quasiment continu.

13. Appareil selon la revendication 3, où chaque chaîne (5) coulisse à l'intérieur d'une coulisse de guidage (7) dont la position peut être modifiée pour l'approcher ou l'éloigner du parcours de convoyage.

14. Appareil selon la revendication 1, où la glissière fixe (4) agit au-dessus du collier saillant (3) et au-dessous du départ du filetage de l'embouchure du récipient.

15. Appareil selon la revendication 1, où un profil inférieur (13) de l'appareil (1) est profilé vers le haut.

16. Procédé pour convoyer des récipients, notamment des récipients faits en matière plastique fournis avec une portion en col au-dessus d'une portion en épaule et munis d'un collier saillant au-dessus de ladite portion en col, les récipients étant mus dans une direction déterminée par une glissière fixe de protection (4) qui supporte les récipients par leur collier (3) en poussant les récipients, **caractérisé en ce que** la poussée sur les récipients se produit au niveau du col sous la glissière fixe et sous le collier par une action symétrique sur les côtés opposés du récipient, dans une direction essentiellement perpendiculaire à celle de convoyage.

17. Procédé selon la revendication 16, où la poussée sur les récipients a une composante vers le haut qui meut les récipients en les maintenant avec le collier soulevé par rapport à la glissière fixe.
